# EUROPÄISCHE PATENTSCHRIFT

(11) **EP 3 303 033 B1**
(45) Veröffentlichungstag und Bekanntmachung des Hinweises auf die Patenterteilung: **03.07.2019**
(21) Anmeldenummer: 16721142.4
(22) Anmeldetag: 03.05.2016
(51) Int. Cl.: B60J 1/20

(54) **BESCHATTUNGSVORRICHTUNG FÜR EINE SCHEIBE ODER EINEN GLASDACHBEREICH EINES FAHRZEUGINNENRAUMS**
SHADING DEVICE FOR A PANE OR A GLASS ROOF REGION OF A VEHICLE INTERIOR
DISPOSITIF D'OCCULATION POUR UNE VITRE OU UNE RÉGION DE TOIT VITRÉ D'UN HABITACLE DE VÉHICULE

(30) Priorität: 01.06.2015 DE 102015210093
(43) Veröffentlichungstag der Anmeldung: 11.04.2018
(73) Patentinhaber: BOS GmbH & Co. KG, 73760 Ostfildern (DE)
(72) Erfinder: SAUER, Roman, 72663 Grossbettlingen (DE)
(74) Vertreter: Patentanwälte Ruff, Wilhelm, Beier, Dauster & Partner mbB
(86) Internationale Anmeldenummer: PCT/EP2016/059834
(87) Internationale Veröffentlichungsnummer: WO 2016/192913

(56) Entgegenhaltungen:
- DE-A1-102006 037 149
- DE-A1-102009 003 641
- US-A- 2 709 107

## Beschreibung

Die Erfindung betrifft eine Beschattungsvorrichtung für eine Scheibe oder einen Glasdachbereich eines Fahrzeuginnenraums mit einem flexiblen Beschattungsgebilde, das zwischen einer in einem Aufnahmebereich kompakt abgelegten Ruheposition und einer entlang der Scheibe oder des Glasdachbereichs aufgespannten Beschattungsposition beweglich gelagert ist, und das an seinem in Aufspannrichtung vorderen Stirnendbereich mit einem formstabilen Auszugprofil versehen ist, das sich zumindest weitgehend über eine gesamte Breite des Beschattungsgebildes erstreckt, und das in der Ruheposition des Beschattungsgebildes in einem Durchtrittsschlitz des Aufnahmebereichs positioniert ist.

Eine derartige Beschattungsvorrichtung ist für Fondseitenscheiben von Personenkraftwagen allgemein bekannt. Eine derartige Beschattungsvorrichtung ist auch für Seitenscheiben von Personenkraftwagen bekannt (wie zum Beispiel in der DE 10 2009 003641 A1 beschrieben ist). Eine derartige Beschattungsvorrichtung weist ein flexibles Beschattungsgebilde auf, das auf einer Wickelwelle auf- und abwickelbar gelagert ist. Die Wickelwelle ist in einem Aufnahmebereich hinter einer Türverkleidung unterhalb einer Fahrzeugbrüstung positioniert und in dem Aufnahmebereich drehbar gelagert. Das flexible Beschattungsgebilde weist an seinem in Auszugrichtung vorderen Stirnendbereich ein formstabiles Auszugprofil auf, das in türfesten seitlichen Führungen an seinen gegenüberliegenden Stirnseiten in Fahrzeughochrichtung verschiebbar geführt ist und so das Beschattungsgebilde aus einer Ruheposition in eine Beschattungsposition überführt. In der Ruheposition des Beschattungsgebildes ist auch das Auszugprofil unterhalb der Fahrzeugbrüstung in dem Aufnahmebereich hinter der Türinnenverkleidung abgelegt. Der Aufnahmebereich weist einen Durchtrittsschlitz auf, der sich über die gesamte Länge des Auszugprofils erstreckt und dem Auszugprofil ein Absenken in den Aufnahmebereich und ein Herausbewegen aus dem Aufnahmebereich in Richtung der Beschattungsposition ermöglicht. Die Länge des Durchtrittsschlitzes ist etwas größer als die Länge des Auszugprofils, um das Hindurchtreten des Auszugprofils zu ermöglichen.

Aufgabe der Erfindung ist es, eine Beschattungsvorrichtung der eingangs genannten Art zu schaffen, die eine sichere und geräuscharme Positionierung des Auszugprofils in dem Aufnahmebereich ermöglicht.

Diese Aufgabe wird dadurch gelöst, dass an gegenüberliegenden Längswandungen des Durchtrittsschlitzes elastisch nachgiebige Dämpfungselemente angeordnet sind, die das Auszugprofil in der Ruheposition des Beschattungsgebildes flankieren und zu den Längswandungen beabstandet stützen. Erfindungsgemäß kann entweder an jeder der beiden gegenüberliegenden Längswandungen des Durchtrittsschlitzes jeweils ein einzelnes Dämpfungselement vorgesehen sein, oder es sind im Bereich jeder Längswandung jeweils mehrere, über die Länge der jeweiligen Längswandung verteilt angeordnete Dämpfungselemente vorgesehen. Durch die erfindungsgemäße Lösung wird das Auszugprofil in der Ruheposition des Beschattungsgebildes in dem Aufnahmebereich zentriert und beabstandet zu den Längswandungen des Durchtrittsschlitzes gehalten. Ein Anschlagen des Auszugprofils an den Längswandungen des Durchtrittsschlitzes oder des Aufnahmebereichs im Fahrbetrieb eines entsprechenden Kraftfahrzeugs, das zu Geräuschen führen könnte, wird hierdurch vermieden. Darüber hinaus wird auch ein Verschleiß des Auszugprofils reduziert, da das Auszugprofil nicht direkt an den Längswandungen des Durchtrittsschlitzes anliegt und demzufolge nicht an diesen Längswandungen entlangreiben kann. Der Durchtrittsschlitz ist vorzugsweise durch einen Deckel verschließbar, der abhängig von einer Stellung des Auszugprofils in eine Öffnungsposition oder eine Schließposition überführt ist. Die erfindungsgemäße Lösung eignet sich in besonders vorteilhafter Weise für den Einsatz bei Personenkraftwagen, dort vorzugsweise zur Beschattung von Seitenscheiben eines Fondbereichs des Personenkraftwagens. In gleicher Weise ist die erfindungsgemäße Beschattungsvorrichtung zur Beschattung einer Heckscheibe oder auch zur Beschattung eines Glasdachbereichs des Personenkraftwagens vorgesehen. Die erfindungsgemäße Beschattungsvorrichtung kann auch bei Last- und Nutzfahrzeugen wie Omnibussen oder bei Schienenfahrzeugen eingesetzt werden.

In Ausgestaltung der Erfindung sind die Dämpfungselemente als Elastomerlaschen gestaltet, die an den Längswandungen des Durchtrittsschlitzes gehalten sind und zu einer Mitte des Durchtrittsschlitzes hin frei abragen. Zu einer Mitte des Durchtrittsschlitzes bedeutet, dass die Elastomerlaschen in den Durchtrittsschlitz nach innen hineinragen mit einer Komponente in Richtung zu einer gegenüberliegenden Längswandung hin. Vorzugsweise ragen die Elastomerlaschen von einer Oberseite des Durchtrittsschlitzes weg in den Aufnahmebereich nach unten, vorzugsweise schräg nach unten.

In weiterer Ausgestaltung der Erfindung sind an jeder Längswandung mehrere Elastomerlaschen vorgesehen, die in Längsrichtung des Durchtrittsschlitzes zueinander beabstandet angeordnet sind. Vorzugsweise sind die Elastomerlaschen an jeder Längswandung in gleichmäßigen Abständen zueinander angeordnet.

In weiterer Ausgestaltung der Erfindung sind die Elastomerlaschen an den gegenüberliegenden Längswandungen jeweils paarweise zueinander diametral gegenüberliegend angeordnet. Dadurch stützen die diametral gegenüberliegenden Elastomerlaschen das Auszugprofil jeweils paarweise zwischen sich.

In weiterer Ausgestaltung der Erfindung sind die Elastomerlaschen an den gegenüberliegenden Längswandungen alternierend in Längsrichtung versetzt zueinander angeordnet. Dadurch können die zueinander versetzten Elastomerlaschen an den gegenüberliegenden Längswandungen jeweils in entsprechende Lücken zwischen den Elastomerlaschen der jeweils anderen Längswandung hineinragen, ohne aneinanderzuliegen.

In weiterer Ausgestaltung der Erfindung ist an jeder Längswandung jeweils eine einzelne Elastomerlasche vorgesehen, die jeweils zumindest über einen Großteil einer Länge des Durchtrittsschlitzes erstreckt ist. Die beiden Elastomerlaschen an den gegenüberliegenden Längswandungen weisen demzufolge jeweils eine Länge auf, die wenigstens einem Großteil einer Länge des Durchtrittsschlitzes entspricht, vorzugsweise wenigstens 70% einer Länge des Durchtrittsschlitzes.

In weiterer Ausgestaltung der Erfindung weist jede Elastomerlasche ein Kederprofil auf, das in einer Kedernut der entsprechenden Längswandung des Durchtrittsschlitzes gehalten ist. Dadurch kann jede Elastomerlasche in die entsprechende Kedernut der Längswandung des Durchtrittsschlitzes bzw. des Aufnahmebereichs eingezogen werden.

In weiterer Ausgestaltung der Erfindung sind die Längswandungen Teil eines Kassettengehäuses, das den Aufnahmebereich für das Beschattungsgebilde darstellt. Das Kassettengehäuse lagert eine Wickelwelle, auf der das flexible Beschattungsgebilde auf- und abwickelbar gehalten ist. Das Kassettengehäuse ist fahrzeugfest montiert. Falls die Beschattungsvorrichtung im Bereich einer Seitenscheibe einer Fondseitentür vorgesehen ist, ist unter der fahrzeugfesten Montage die türfeste Montage des Kassettengehäuses zu verstehen.

In weiterer Ausgestaltung der Erfindung weist jede Elastomerlasche wenigstens einen an das Kederprofil einteilig anschließenden Flügelabschnitt auf, der frei von der Längswandung zur Mitte des Durchtrittsschlitzes hin abragt. Der Flügelabschnitt ist elastisch nachgiebig und kann sich an das Auszugprofil anlegen, sobald das Auszugprofil auf Höhe der Elastomerlaschen im Durchtrittsschlitz positioniert ist. Das Auszugprofil ist demzufolge zwischen gegenüberliegenden Flügelabschnitten der Elastomerlaschen elastisch gestützt und zentriert.

In weiterer Ausgestaltung der Erfindung weist jede Elastomerlasche mehrere voneinander getrennte Flügelabschnitte auf, die jeweils einstückig zu dem Kederprofil der Elastomerlasche angeordnet sind. Die Trennung der Flügelabschnitte ist vorzugsweise über Einschnitte oder Schlitze bewirkt, die von den frei abragenden Endbereichen der Flügelabschnitte her in Richtung des Kederprofils erstreckt sind und so in Längsrichtung des Durchtrittsschlitzes nebeneinander angeordnete, unabhängig voneinander elastisch biegbare Flügelabschnitte bilden.

In weiterer Ausgestaltung der Erfindung ist jeder Flügelabschnitt mittels eines materialeinheitlichen Festkörpergelenks einstückig an dem Kederprofil angeordnet, und jeder Flügelabschnitt ragt von dem Festkörpergelenk aus entgegen der Auszugrichtung des Auszugprofils in den Durchtrittsschlitz hinein ab. Dadurch können Flügelabschnitte und Kederprofile einstückig aus einem geeigneten Elastomermaterial hergestellt sein. Statt eines einheitlichen Elastomermaterials ist es auch möglich, insbesondere über Koextrusion das Kederprofil und den wenigstens einen Flügelabschnitt jeder Elastomerlasche aus unterschiedlichen Kunststoffmaterialien herzustellen und dennoch die Einstückigkeit zwischen Flügelabschnitten und Kederprofilen beizubehalten.

In weiterer Ausgestaltung der Erfindung ragt jeder Flügelabschnitt in unbelastetem Ausgangszustand geneigt zu der Längswandung ab. Die Neigung jedes Flügelabschnitts erstreckt sich mit Richtungskomponenten zu einer vertikalen Mittelebene des Durchtrittsschlitzes sowie in das Innere des Aufnahmebereichs nach unten hin, wobei jeder Flügelabschnitt - im Querschnitt gesehen - unterschiedliche Neigungen im Verlauf seiner Erstreckung vom Kederprofil zu seinem freien Ende hin aufweisen kann. Mit anderen Worten, der jeweilige Flügelabschnitt kann im Querschnitt gekrümmt oder geradlinig erstreckt ausgeführt sein.

In weiterer Ausgestaltung der Erfindung ist jede Kedernut durchgängig über eine gesamte Länge der Längswandung erstreckt und zu wenigstens einer Stirnseite der Längswandung hin offen. Dadurch ist es möglich, ein Kederprofil der entsprechenden Elastomerlasche von einer Stirnseite der Längswandung aus in die entsprechende Kedernut einzuziehen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematischer Schnittdarstellung eine Ausführungsform einer erfindungsgemäßen Beschattungsvorrichtung für eine Seitenscheibe einer Fahrzeugtür in funktionsfertig montiertem Zustand,
- Fig. 2: die Darstellung nach Fig. 1 in einer geringfügig veränderten Zwischenstellung eines Auszugprofils,
- Fig. 3: einen vergrößerten Ausschnitt der Darstellung nach Fig. 2 und
- Fig. 4a bis 4h: schematisch verschiedene Ausführungsformen erfindungsgemäßer Beschattungsvorrichtungen mit unterschiedlich gestalteten Auszugprofilen.

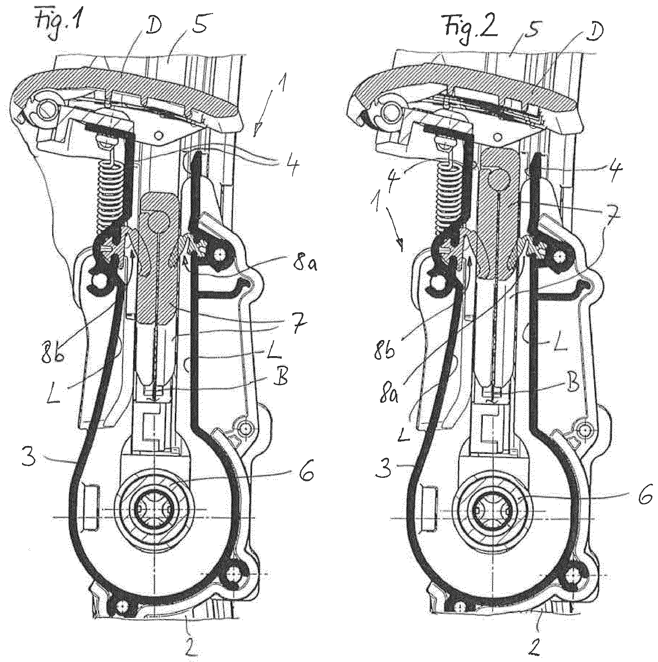

Eine Beschattungsvorrichtung 1 nach den Fig. 1 bis 3 ist zur Beschattung einer Seitenscheibe einer Fahrzeugtür 2 vorgesehen, die in den Fig. 1 bis 3 lediglich teilweise im Querschnitt dargestellt ist. Die Beschattungsvorrichtung 1 weist einen Aufnahmebereich 3 in Form eines Kassettengehäuses auf, der mit entsprechenden Türkarosserieabschnitten der Fahrzeugtür 2 fest verbunden ist. Der Aufnahmebereich 3 erstreckt sich im Bereich einer Türinnenseite längs der Fahrzeugtür 2 und ist unterhalb einer Türbrüstung positioniert, die auf Höhe einer Fahrzeugbordkante bzw. einer Fahrzeugbrüstung angeordnet ist. Oberhalb der Türbrüstung erstreckt sich eine Seitenscheibe der Fahrzeugtür 2. Die Beschattungsvorrichtung 1 ist mit ihrem Aufnahmebereich 3 zwischen einer nicht dargestellten Türinnenverkleidung und den Türkarosserieabschnitten der Fahrzeugtür 2 positioniert. Der Aufnahmebereich 3 ist in Fahrzeughochrichtung nach oben über seine Länge offen und bildet einen Durchtrittsschlitz 4. Der Durchtrittsschlitz 4 ist durch einen schwenkbeweglich gelagerten Deckel D verschließbar und freigebbar, der mit seiner Oberfläche bündig mit der Türbrüstung und demzufolge bündig mit einer Oberseite der Türinnenverkleidung abschließt. Der Deckel D bildet ein einteiliges Bauteil, das sich über die gesamte Länge des Durchtrittsschlitzes 4 und damit über zumindest nahezu die gesamte Länge einer Seitenscheibe der Fahrzeugtür 2 erstreckt.

Die Seitenscheibe wird auf gegenüberliegenden Seiten in Fahrzeughochrichtung flankiert von jeweils einem Türrahmen, in dem jeweils eine Führungsschiene 5 angeordnet ist, die der Beschattungsvorrichtung 1 zugeordnet ist. Die beiden Führungsschienen 5 im Bereich der gegenüberliegenden Türrahmen der Seitenscheibe dienen zur stirnseitigen Führung eines Auszugprofils 7 der Beschattungsvorrichtung 1, das formstabil gestaltet ist. Das Auszugprofil 7 ist an einem in Auszugrichtung vorderen Stirnendbereich eines flexiblen Beschattungsgebildes B befestigt. Das Beschattungsgebilde B ist auf einer Wickelwelle 5 auf- und abwickelbar gehalten, die in dem als Aufnahmebereich 3 dienenden Kassettengehäuse drehbar gelagert ist. Die Wickelwelle 6 erstreckt sich in Längsrichtung des Aufnahmebereichs 3 und damit zumindest weitgehend in Fahrzeuglängsrichtung. Das Beschattungsgebilde B kann mittels des Auszugprofils 7 aus einer in dem Aufnahmebereich 3 abgelegten Ruheposition nach oben durch den Durchtrittsschlitz 4 hindurch von einer Oberkante eines Türrahmens der Fahrzeugtür 2 ausgezogen werden, um es in seine Beschattungsposition zu überführen, in der die Seitenscheibe zumindest weitgehend vollständig innenseitig durch das Beschattungsgebilde B überdeckt ist.

Das Auszugprofil 7 ist mit seinen gegenüberliegenden Stirnseiten mittels nicht näher dargestellter Führungsglieder in den Führungsschienen 5 der Fahrzeugtür 2 in Fahrzeughochrichtung parallelverschiebbar gelagert. Zur Verlagerung des Auszugprofils 7 zwischen einer in den Aufnahmebereich 3 eingefahrenen Ruhestellung und einer bis zu einem oberen Rand der Seitenscheibe und des Türrahmens ausgefahrenen Funktionsstellung ist eine nicht dargestellte Antriebsvorrichtung vorgesehen, die einen elektrischen Antriebsmotor sowie geeignete Antriebsübertragungsmittel in Form flexibler Gewindewellen umfasst, die mit den Führungsgliedern der Stirnseiten des Auszugprofils 7 zusammenwirken, und die längsverlaufend im Bereich der Führungsschienen 5 der seitlichen Türrahmen verlegt sind.

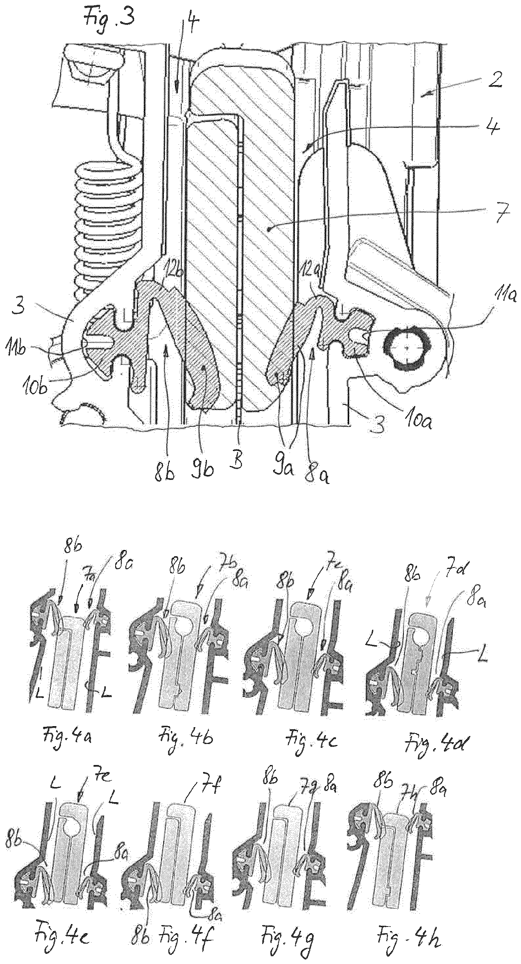

Anhand der Fig. 1 bis 3 ist erkennbar, dass eine Dicke des Auszugprofils 7 geringer ist als eine Breite des Durchtrittsschlitzes 4. Um auch bei einer großen Länge des Auszugprofils 7 und entsprechend großer Länge des Durchtrittsschlitzes 4 eine sichere und klapperfreie Stützung des Auszugprofils 7 in der Ruhestellung zu bewirken, in der das Auszugprofil 7 in den Aufnahmebereich 3 eingefahren ist, sind an gegenüberliegenden Längswandungen L des Aufnahmebereichs 3 und damit des Durchtrittsschlitzes 4 innenseitig elastisch nachgiebige Dämpfungselemente vorgesehen, die als Elastomerlaschen 8a, 8b ausgeführt sind. Jede Elastomerlasche 8a, 8b ist einteilig aus einem Elastomermaterial hergestellt und weist jeweils einen Flügelabschnitt 9a, 9b auf, der über jeweils ein Festkörpergelenk 12a, 12b einstückig mit einem Kederprofil 10a, 10b verbunden ist. Die Kederprofile 10a, 10b der Elastomerlaschen 8a, 8b sind formschlüssig in Kedernuten 11a, 11b der gegenüberliegenden Längswandungen L des Aufnahmebereichs 3 gehalten, deren freies Querschnittsprofil auf ein Querschnittsprofil der Kederprofile 10a, 10b abgestimmt ist. Details der formschlüssigen Aufnahme der Kederprofile 10a, 10b in den komplementär gestalteten Kedernuten 11a, 11b sind anhand der Fig. 3 gut erkennbar. Die Kedernuten 11a, 11b sind einstückig in den gegenüberliegenden Längswandungen L des Aufnahmebereichs 3, d.h. des Kassettengehäuses, eingeformt.

Die Kederprofile 10a, 10b weisen Profilabschnitte auf, die in die jeweilige Kedernut 11a, 11b eintauchen. Darüber hinaus weist jedes Kederprofil 10a, 10b auch einen weiteren, zur Mitte des Durchtrittsschlitzes 4 hin erstreckten Stützprofilabschnitt auf, der durch einen offenen Schlitzbereich jeder Kedernut 11a zur Mitte des Durchtrittsschlitzes 4 hin offen ist. Die entsprechenden Stützprofilabschnitte der Kederprofile 10a, 10b stützen sich zudem innenseitig an den Längswandungen L ab. Im Bereich einer Oberseite der jeweiligen Stützprofilabschnitte sind die Festkörpergelenke 12a, 12b angeformt, die ein einstückig angeformtes Scharnier für die Flügelabschnitte 9a, 9b bilden. Über die Festkörpergelenke 12a, 12b sind die Flügelabschnitte 9a, 9b elastisch schwenkbeweglich angeordnet. Jeder Flügelabschnitt 9a, 9b erstreckt sich von dem Festkörpergelenk 12a, 12b ausgehend zum einen zur Mitte des Durchtrittsschlitzes 4 hin und zum anderen nach unten in Richtung zur Wickelwelle 6. Dabei sind beide Flügelabschnitte 9a, 9b in unbelasteter Ruhestellung gemäß den Darstellungen in den Fig. 1 bis 3 zu einer vertikalen Längsebene, in der das Beschattungsgebilde B erstreckt ist, geneigt ausgerichtet. Die entsprechend schräg nach unten gerichtete Ausrichtung der Flügelabschnitte 9a, 9b ist in Fig. 3 gut zu erkennen. Freie Stirnendbereiche der Flügelabschnitte 9a, 9b sind abgerundet ausgeführt, wobei der Flügelabschnitt 9b zusätzlich eine Krümmung in Richtung zur benachbarten Längswandung L an seinem freien Stirnendbereich aufweist.

Beim dargestellten Ausführungsbeispiel erstreckt sich jede der beiden Elastomerlaschen 8a, 8b durchgängig über zumindest einen Großteil der Länge des Auszugprofils 7 innerhalb der jeweiligen Kedernut 11a, 11b. Auch die beiden Kedernuten 11a und 11b erstrecken sich über die gesamte Länge des Aufnahmebereichs 3 und damit der Längswandungen L im Bereich des Durchtrittsschlitzes 4 durchgängig und sind zu Stirnseiten der Längswandungen L hin offen. Dadurch ist es möglich, dass die beiden Elastomerlaschen 8a, 8b mit ihren Kederprofilen 10a, 10b von einer Stirnseite her in die Kedernuten 11a, 11b der Längswandungen L eingezogen werden. Die beiden Elastomerlaschen 8a und 8b flankieren demzufolge in betriebsfertig eingezogenem Zustand das Auszugprofil 7 in seiner Ruhestellung über seine gesamte Länge nach Art von Dicht- oder Stützlippen durchgängig. Sobald das Auszugprofil 7 aus einer ausgezogenen Funktionsstellung in die Ruhestellung innerhalb des Durchtrittsschlitzes 4 hineingefahren wird, werden die Flügelabschnitte 9a, 9b durch die Anlage des Auszugprofils 7 nach außen in Richtung der jeweils benachbarten Längswandung L gedrängt, wobei entsprechend einander zugewandte Innenflächen der gegenüberliegenden Flügelabschnitte 9a, 9b sich an die Außenseite des Auszugprofils 7 unter elastischer Deformation der Elastomerlaschen 8a, 8b anschmiegen. Die Elastomerlaschen 8a, 8b bewirken demzufolge eine Stützkraft auf das Auszugprofil 7 in Richtung zur Mitte des Durchtrittsschlitzes 4 hin, wodurch das Auszugprofil 7 in der Ruhestellung zentriert zwischen den Elastomerlaschen 8a, 8b gehalten und gleichzeitig in Abstand zu den Längswandungen L positioniert wird. Sobald das Auszugprofil 7 wieder nach oben in Richtung einer ausgezogenen Funktionsstellung ausgefahren wird, schwenken die Flügelabschnitte 9a, 9b der Elastomerlaschen 8a, 8b wieder in die unbelastete Ausgangslage zurück, in der sie schräg nach innen zur Mitte des Durchtrittsschlitzes hin geneigt sind und zueinander beabstandet bleiben, um das reibungsfreie Hindurchtreten des Beschattungsgebildes B zwischen diesen Elastomerlaschen 8a, 8b zu ermöglichen.

Bei nicht dargestellten Ausführungsbeispielen der Erfindung sind die Flügelabschnitte 9a, 9b mit in Längsrichtung des Durchtrittsschlitzes 4 zueinander beabstandeten Trennungsschlitzen versehen, um eine Vielzahl von hintereinander angeordneten Flügelabschnitten zu erreichen, die unabhängig voneinander schwenkbeweglich sind. Hierdurch ist eine weitere verbesserte Anpassung zur seitlichen Stützung eines Auszugprofils insbesondere bei großer Länge ermöglicht, ohne dass sich Verwindungen oder Verwerfungen der Flügelabschnitte ergeben. Derartige Verwindungen oder Verwerfungen können auftreten, falls bei relativ großer Länge einer Elastomerlasche ein einzelner, durchgängig über die gesamte Länge erstreckter Flügelabschnitt vorgesehen ist.

Alternativ ist es bei einer ebenfalls nicht dargestellten Ausführungsform der Erfindung möglich, auf jeder Seite, d.h. entlang jeder Längswandung L, mehrere kurze, zueinander beabstandete und voneinander getrennte Elastomerlaschen vorzusehen, die in Längsrichtung miteinander fluchten und die einzeln mit entsprechend kurzen Kederprofilen in die durchgängige Kedernut eingezogen werden. Hierdurch sind die Abstände der einzelnen Elastomerlaschen in Längsrichtung des Durchtrittsschlitzes 4 zueinander frei wählbar.

Anhand der schematisch dargestellten Ausführungsformen gemäß den Fig. 4a bis 4h sind unterschiedlich gestaltete Auszugprofile vorgesehen, die sich sowohl in ihrer Querschnittsgestaltung als auch in ihrer Breite und ihrer Höhe voneinander unterscheiden. Anhand der schematisch dargestellten Ausrichtung der Elastomerlaschen 8a, 8b in unbelasteter Ruhestellung und in Anlagestellung an dem jeweiligen Auszugprofil 7 ist die elastische Nachgiebigkeit der Elastomerlaschen 8a, 8b gut erkennbar. Hierdurch ist auch erkennbar, dass die Elastomerlaschen 8a, 8b nicht nur für eine einzige Form und Größe eines Auszugprofils geeignet sind, sondern für mehrere unterschiedliche Gestaltungen von Auszugprofilen 7. Um die unterschiedliche Gestaltung der Auszugprofile 7 zu verdeutlichen, sind die Auszugprofile 7 bei den unterschiedlichen Darstellungen mit unterschiedlichen Kleinbuchstaben a bis h versehen.

## Patentansprüche

1. Beschattungsvorrichtung (1) für eine Scheibe oder einen Glasdachbereich eines Fahrzeuginnenraumes mit einem flexiblen Beschattungsgebilde (B), das zwischen einer in einem Aufnahmebereich (3) kompakt abgelegten Ruheposition und einer entlang der Scheibe oder des Glasdachbereichs aufgespannten Beschattungsposition beweglich gelagert ist, und das an seinem in Aufspannrichtung vorderen Stirnendbereich mit einem formstabilen Auszugprofil (7; 7a bis 7h) versehen ist, das sich zumindest weitgehend über eine gesamte Breite des Beschattungsgebildes (B) erstreckt, und das in der Ruheposition des Beschattungsgebildes in einem Durchtrittsschacht (4) des Aufnahmebereichs (3) positioniert ist, **dadurch gekennzeichnet, dass** an gegenüberliegenden Längswandungen (L) des Durchtrittsschachtes (4) elastisch nachgiebige Dämpfungselemente (8a, 8b) angeordnet sind, die das Auszugprofil (7; 7a bis 7h) in der Ruheposition des Beschattungsgebildes (B) flankieren und zu den Längswandungen (L) beabstandet stützen.

2. Beschattungsvorrichtung nach Anspruch 1, **dadurch gekennzeichnet, dass** die Dämpfungselemente als Elastomerlaschen (8a, 8b) gestaltet sind, die an den Längswandungen (L) des Durchtrittsschachtes (4) gehalten sind und zu einer Mitte des Durchtrittsschachtes hin frei abragen.

3. Beschattungsvorrichtung nach Anspruch 1, **dadurch gekennzeichnet, dass** an jeder Längswandung (L) mehrere Elastomerlaschen (8a, 8b) vorgesehen sind, die in Längsrichtung des Durchtrittsschachtes (4) zueinander beabstandet angeordnet sind.

4. Beschattungsvorrichtung nach Anspruch 3, **dadurch gekennzeichnet, dass** die Elastomerlaschen (8a, 8b) an den gegenüberliegenden Längswandungen (L) jeweils paarweise zueinander diametral gegenüberliegend angeordnet sind.

5. Beschattungsvorrichtung nach Anspruch 3, **dadurch gekennzeichnet, dass** die Elastomerlaschen an den gegenüberliegenden Längswandungen alternierend in Längsrichtung versetzt zueinander angeordnet sind.

6. Beschattungsvorrichtung nach Anspruch 1, **dadurch gekennzeichnet, dass** an jeder Längswandung (L) jeweils eine einzelne Elastomerlasche (8a, 8b) vorgesehen ist, die jeweils zumindest über einen Großteil einer Länge des Durchtrittsschachtes (4) erstreckt ist.

7. Beschattungsvorrichtung nach einem der Ansprüche 2 bis 6, **dadurch gekennzeichnet, dass** jede Elastomerlasche (8a, 8b) ein Kederprofil (10a, 10b) aufweist, das in einer Kedernut (11a, 11b) der entsprechenden Längswandung (L) des Durchtrittsschachtes (4) gehalten ist.

8. Beschattungsvorrichtung nach einem der vorhergehenden Ansprüche, **dadurch gekennzeichnet, dass** die Längswandungen (L) Teil eines Kassettengehäuses sind, das den Aufnahmebereich (3) für das Beschattungsgebilde darstellt.

9. Beschattungsvorrichtung nach Anspruch 7, **dadurch gekennzeichnet, dass** jede Elastomerlasche (8a, 8b) wenigstens einen an das Kederprofil (10a, 10b) einteilig anschließenden Flügelabschnitt (9a, 9b) aufweist, der frei von der Längswandung (L) zur Mitte des Durchtrittsschachtes (4) hin abragt.

10. Beschattungsvorrichtung nach Anspruch 9, **dadurch gekennzeichnet, dass** jede Elastomerlasche mehrere voneinander getrennte Flügelabschnitte aufweist, die jeweils einstückig zu dem Kederprofil der Elastomerlasche angeordnet sind.

11. Beschattungsvorrichtung nach Anspruch 9 oder 10, **dadurch gekennzeichnet, dass** jeder Flügelabschnitt (9a, 9b) mittels eines materialeinheitlichen Festkörpergelenks (12a, 12b) einstückig an dem Kederprofil (10a, 10b) angeordnet ist, und dass jeder Flügelabschnitt (9a, 9b) von dem Festkörpergelenk (12a, 12b) aus entgegen der Auszugrichtung des Auszugprofils (7) in den Durchtrittsschacht (4) hinein abragt.

12. Beschattungsvorrichtung nach Anspruch 11, **dadurch gekennzeichnet, dass** jeder Flügelabschnitt (9a, 9b) in unbelastetem Ausgangszustand geneigt zu der Längswandung (L) abragt.

13. Beschattungsvorrichtung nach Anspruch 7, **dadurch gekennzeichnet, dass** jede Kedernut (11a, 11b) durchgängig über eine gesamte Länge der Längswandung (L) erstreckt und zu wenigstens einer Stirnseite der Längswandung hin offen ist.

## Claims

1. Shading device (1) for a pane or a glass roof region of a vehicle interior, with a flexible shading structure (B) which is mounted so as to be movable between a rest position, in which it is stowed in a receiving region (3) in a compact manner, and a shading position, in which it spans the pane or the glass roof region, and which is provided with a dimensionally stable pull-out profile (7; 7a to 7h) at its front end region in the spanning direction, which pull-out profile extends at least largely over an entire width of the shading structure (B) and is positioned in a passage well (4) of the receiving region (3) in the rest position of the shading structure,
**characterized in that**
elastically resilient damping elements (8a, 8b) are arranged on opposite longitudinal walls (L) of the passage well (4), which damping elements flank the pull-out profile (7; 7a to 7h) in the rest position of the shading structure (B) and support the pull-out profile at a distance from the longitudinal walls (L).

2. Shading device according to claim 1, **characterized in that** the damping elements are configured as elastomeric lugs (8a, 8b) which are held on the longitudinal walls (L) of the passage well (4) and protrude freely toward a center of the passage well.

3. Shading device according to claim 1, **characterized in that** several elastomeric lugs (8a, 8b) are provided on each longitudinal wall (L) and are arranged at a distance from each other in the longitudinal direction of the passage well (4).

4. Shading device according to claim 3, **characterized in that** the elastomeric lugs (8a, 8b) on the opposite longitudinal walls (L) are in each case arranged lying diametrically opposite each other in pairs.

5. Shading device according to claim 3, **characterized in that** the elastomeric lugs on the opposite longitudinal walls are alternatingly offset in relation to each other in the longitudinal direction.

6. Shading device according to claim 1, **characterized in that** an individual elastomeric lug (8a, 8b) is provided on each longitudinal wall (L) and in each case extends at least over a large part of a length of the passage well (4).

7. Shading device according to any of claims 2 to 6, **characterized in that** each elastomeric lug (8a, 8b) has a keder profile (10a, 10b) which is held in a keder groove (11a, 11b) of the corresponding longitudinal wall (L) of the passage well (4).

8. Shading device according to any of the preceding claims, **characterized in that** the longitudinal walls (L) are part of a cassette housing which constitutes the receiving region (3) for the shading structure.

9. Shading device according to claim 7, **characterized in that** each elastomeric lug (8a, 8b) has at least one wing portion (9a, 9b) which integrally adjoins the keder profile (10a, 10b) and which protrudes freely from the longitudinal wall (L) toward the center of the passage well (4).

10. Shading device according to claim 9, **characterized in that** each elastomeric lug has several wing portions which are separate from each other and which are each arranged in one piece with the keder profile of the elastomeric lug.

11. Shading device according to claim 9 or 10, **characterized in that** each wing portion (9a, 9b) is arranged integrally on the keder profile (10a, 10b) by means of a materially uniform flexure bearing (12a, 12b), and **in that** each wing portion (9a, 9b) protrudes from the flexure bearing (12a, 12b) into the passage well (4) counter to the pull-out direction of the pull-out profile (7).

12. Shading device according to claim 11, **characterized in that** each wing portion (9a, 9b), in the unloaded initial state, protrudes at an angle from the longitudinal wall (L).

13. Shading device according to claim 7, **characterized in that** each keder groove (11a, 11b) extends continuously along an entire length of the longitudinal wall (L) and is open toward at least one end face of the longitudinal wall.

## Revendications

1. Dispositif d'ombrage (1) pour une vitre ou une région de toit vitré d'un habitacle de véhicule, comprenant une structure d'ombrage flexible (B) qui est montée de manière déplaçable entre une position de repos rangée de manière compacte dans une région de réception (3) et une position d'ombrage tendue le long de la vitre ou de la région de toit vitré et qui est dotée d'un profilé d'extraction (7 ; 7a à 7h) à stabilité de forme au niveau de sa région d'extrémité frontale avant dans le sens de tension, lequel profilé d'extraction s'étend au moins dans une large mesure sur toute une largeur de la structure d'ombrage (B) et est, dans la position de repos de la structure d'ombrage, positionné dans un conduit de passage (4) de la région de réception (3), **caractérisé en ce que** des éléments d'amortissement (8a, 8b) élastiquement souples sont disposés sur des parois longitudinales (L) se faisant face du conduit de passage (4), lesquels éléments d'amortissement flanquent le profilé d'extraction (7 ; 7a à 7h) dans la position de repos de la structure d'ombrage (B) et le supportent de manière espacée des parois longitudinales (L).

2. Dispositif d'ombrage selon la revendication 1, **caractérisé en ce que** les éléments d'amortissement sont configurés sous forme de languettes élastomères (8a, 8b) qui sont retenues sur les parois longitudinales (L) du conduit de passage (4) et font saillie librement en direction du centre du conduit de passage.

3. Dispositif d'ombrage selon la revendication 1, **caractérisé en ce que** plusieurs languettes élastomères (8a, 8b) sont prévues sur chaque paroi longitudinale (L), lesquelles sont disposées de manière espacée les unes des autres dans la direction longitudinale du conduit de passage (4).

4. Dispositif d'ombrage selon la revendication 3, **caractérisé en ce que** les languettes élastomères (8a, 8b) sont respectivement disposées de manière diamétralement opposée les unes aux autres par paires sur les parois longitudinales (L) se faisant face.

5. Dispositif d'ombrage selon la revendication 3, **caractérisé en ce que** les languettes élastomères sont disposées de manière décalée les unes aux autres dans la direction longitudinale en alternance sur les parois longitudinales se faisant face.

6. Dispositif d'ombrage selon la revendication 1, **caractérisé en ce qu'**une seule languette élastomère (8a, 8b) est prévue respectivement sur chaque paroi longitudinale (L), laquelle languette élastomère s'étend respectivement au moins sur une grande partie d'une longueur du conduit de passage (4).

7. Dispositif d'ombrage selon l'une des revendications 2 à 6, **caractérisé en ce que** chaque languette élastomère (8a, 8b) comprend un profilé de bourrelet (10a, 10b) qui est retenu dans une rainure de bourrelet (11a, 11b) de la paroi longitudinale (L) correspondante du conduit de passage (4).

8. Dispositif d'ombrage selon l'une des revendications précédentes, **caractérisé en ce que** les parois longitudinales (L) font partie d'un corps de caisson qui constitue la région de réception (3) pour la structure d'ombrage.

9. Dispositif d'ombrage selon la revendication 7, **caractérisé en ce que** chaque languette élastomère (8a, 8b) comprend au moins une partie ailette (9a, 9b) se raccordant d'un seul tenant au profilé de bourrelet (10a, 10b), laquelle partie ailette fait saillie librement à partir de la paroi longitudinale (L) vers le centre du conduit de passage (4).

10. Dispositif d'ombrage selon la revendication 9, **caractérisé en ce que** chaque languette élastomère comprend plusieurs parties ailettes séparées les unes des autres qui sont respectivement disposées d'une seule pièce par rapport au profilé de bourrelet de la languette élastomère.

11. Dispositif d'ombrage selon la revendication 9 ou 10, **caractérisé en ce que** chaque partie ailette (9a, 9b) est disposée d'une seule pièce sur le profilé de bourrelet (10a, 10b) au moyen d'une articulation monolithique venue de matière (12a, 12b), et **en ce que** chaque partie ailette (9a, 9b) fait saillie dans le conduit de passage (4) à partir de l'articulation monolithique (12a, 12b) en sens inverse au sens d'extraction du profilé d'extraction (7).

12. Dispositif d'ombrage selon la revendication 11, **caractérisé en ce que** chaque partie ailette (9a, 9b) fait saillie de manière inclinée par rapport à la paroi longitudinale (L) à l'état initial non sollicité.

13. Dispositif d'ombrage selon la revendication 7, **caractérisé en ce que** chaque rainure de bourrelet (11a, 11b) s'étend de manière continue sur toute une longueur de la paroi longitudinale (L) et est ouverte vers l'au moins un côté frontal de la paroi longitudinale.
